Europäisches Patentamt

European Patent Office

Office européen des brevets

(11) Veröffentlichungsnummer: **0 380 086**
**A1**

## (12) EUROPÄISCHE PATENTANMELDUNG

(21) Anmeldenummer: 90101446.4

(51) Int. Cl.⁵: **A47J 37/07**

(22) Anmeldetag: 25.01.90

(30) Priorität: 26.01.89 DE 3902213

(43) Veröffentlichungstag der Anmeldung:
01.08.90 Patentblatt 90/31

(84) Benannte Vertragsstaaten:
AT BE CH DE DK ES FR GB GR IT LI LU NL SE

(71) Anmelder: **Linke, Albert**
**Graf Hoensbroechstrasse 108**
**D-5014 Kerpen-Balkhausen(DE)**

(72) Erfinder: **Linke, Albert**
**Graf Hoensbroechstrasse 108**
**D-5014 Kerpen-Balkhausen(DE)**

(74) Vertreter: **Berkenfeld, Helmut, Dipl.-Ing.**
**An der Schanz 2**
**D-5000 Köln 60(DE)**

(54) **Fertig-Grill.**

(57) Der Fertig-Grill enthält sämtliche zum Grillen notwendigen Teile. Dies sind eine Schale (12) mit einem in dieser gehaltenen Kohlerost (18) für Holzkohle-Briketts (34) und Zündwürfel (38), mit einem unter diesem Kohlerost gebildeten Ascheraum (30) und mit einem über den Holzkohle-Briketts gehaltenen Grillrost (16) zum Auflegen des Grillgutes. Die Holzkohle-Briketts sind staubdicht in einen Papierbeutel (36) eingeschlossen. Die Zündwürfel sind gasdicht in einen Beutel (40) aus einer Kunststoffolie eingeschlossen. Die mit diesen Teilen vom Hersteller gefüllte Schale liegt selbst in einem eine Verpak-kung bildenden Rahmen (14) und einer Schrumpf-pakkung (60). Zum Gebrauch wird diese Packung geöffnet, die Schale aus dem Rahmen herausge-nommen und auf diesen aufgesetzt. Beim Grillen bildet er einen Ständer. Der Anwender erhält damit sämtliche zum Grillen benötigten Teile in einer ge-schlossenen Verpackung. Nach Gebrauch legt er diese in einen mitgelieferten Entsorgungs-Beutel (20). Ohne Verschmutzung des Grillplatzes kann er die Teile des Grills, die Asche usw. umweltschonend entsorgen.

FIG.3

EP 0 380 086 A1

## Fertig-Grill

Die Erfindung betrifft einen Fertig-Grill mit einer Schale mit in deren Wänden vorgesehenen Öffnungen, mit mindestens einem an den Wänden in einem Abstand über dem Boden gehaltenen Rost zum Auflegen des Grillgutes, mit zwischen Boden und Rost befindlichen Holzkohle-Briketts und mit einer Zündhilfe.

Fertig-Grills dieser Gattung sind in verschiedenen Ausführungen auf dem Markt. Bei einer Ausführung haben die Schalen, die im allgemeinen aus Aluminiumblech bestehen, glatte Wände, und der Rost liegt unmittelbar auf den Holzkohle-Briketts auf. Damit wird dieser nicht stabil gehalten. Die Zündhilfe besteht bei den bekannten Grills aus einem mit Paraffin getränkten Preßspanstreifen oder aus mit Paraffin getränktem Papier. Diese Zündhilfen befinden sich irgendwo und gegebenenfalls auch unter den Holzkohle-Briketts. Damit ist die Zündhilfe nur schwer zu erkennen und auch nur unter Schwierigkeiten mit einem brennenden Streichholz oder einem brennenden Feuerzeug zu erreichen. Zum Vermeiden dieser Schwierigkeit weist ein bekannter Grill in seinen Wänden sehr große Öffnungen auf. Der Querschnitt dieser Öffnungen überschreitet den durch eine DIN-Vorschrift vorgegebenen maximalen Wert beträchtlich. Die großen Öffnungen erleichtern den Zugang zu der Zündhilfe. Die Holzkohle-Briketts können aber, insbesondere wenn sie beim Abbrennen kleiner werden, durch diese großen Öffnungen hinausfallen. Somit läßt sich mit diesem Grill nicht sauber arbeiten. Seine Umgebung wird mit herausfallender glühender, heißer Asche beschmutzt. Die Umgebung wird angesenkt und gefährdet. Es besteht Brandgefahr. Bei einem bekannten Grill werden die Öffnungen von innen nach außen gestanzt. Dabei bilden sich nach außen herausgedrückte Laschen. An diesen kann sich ein Benutzer des Grills verletzen. Das bei den bekannten Zündhilfen verwandte Paraffin brennt unter Geruchsbildung ab. Diese Gerüche und andere Schadstoffe lagern sich beim Abbrennen der Zündwürfel auf dem Grill ab. Beim späteren Grillvorgang können sie in das Grillgut eindringen und dessen Geschmack verändern. Beim Betrieb des Grills und beim Abbrennen der Briketts entstehen Temperaturen von einigen hundert Grad. Auch der Boden der Schale erhitzt sich auf über 100°. Falls der Grill bei seinem Betrieb auf einem Tisch oder einem Stuhl steht, besteht damit Brandgefahr. Aus diesem Grund wird auch nach DIN 66077/09.81 in Anlehnung vorgeschrieben, daß der Grill auf einem Gestell aufstehen und die Temperatur an der Aufstellfläche des Gestells den nach DIN zulässigen Höchstwert von 70° nicht übersteigen soll. Ein weiterer Mangel der bekannten Fertig-Grills liegt darin, daß ihre Verwender nicht angehalten werden, die Schale, den oder die Roste und die ausgeglühten Holzkohle-Briketts nach Gebrauch zusammenzutragen und geschlossen in einen Mülleimer oder dergleichen zu werfen. Man läßt den Grill einfach stehen. Damit werden die Wiese, die Parkfläche oder dergleichen, in der man gegrillt hat, verschmutzt und die Umwelt belastet. Bekannt ist auch ein Fertig-Grill, bei dem die Wände der Schale zu deren Versteifung Sicken aufweisen. Ebenso ist es bekannt, Anzündstreifen einfach auf den Boden der Schale aufzulegen und sie mit einem Maschendraht abzudecken. Die Holzkohle-Briketts werden auf den Maschendraht gelegt. Der das Grillgut tragende Rost liegt unmittelbar auf diesen Holzkohle-Briketts auf.

Bekannt ist ein Grill (US-PS 4 455 992) aus einem aus Wandteilen zusammenbaubaren Kasten. Dieser ist oben offen. Auf diese offene Oberseite wird ein Grillrost aufgelegt. Haken sind im Abstand übereinander an den Innenseiten der Seitenwände befestigt. Auf diese Haken werden Kohleroste aufgelegt. Bekannt ist weiter ein Grill (US-PS 3 946 65i) aus einem Kasten, auf dessen offener Oberseite ein Grillrost aufliegt und dessen Seitenwände treppenförmige Absätze aufweisen. Auf diesen Absätzen liegen Fettfangschalen auf. Bekannt ist weiter ein Grill (US-PS 3 841 298) mit einer Aluminiumschale, auf de ren offener Oberseite ein Grillrost aufliegt, und mit einem zusammenfaltbaren Behälter aus Pappe. Im Betrieb bildet dieser Behälter einen Ständer zur Aufnahme der Schale.

Hiervon ausgehend liegt der Erfindung die Aufgabe zugrunde, einen Fertig-Grill so auszubilden, daß er die Holzkohle-Briketts und die Zündhilfe schon in Gebrauchslage enthält und der Benutzer diese nicht getrennt kaufen und in den Grill einlegen muß. Weiter soll er in sich formstabil sein, damit die Holzkohle-Briketts sicher abbrennen. Weiter soll das Grillgut, das heißt Grillwürstchen, Schweinekottelets oder -steaks, Filetsteaks usw., gleichmäßig und schonend erhitzt bzw. gegrillt werden. Weiter sollen die Holzkohle-Briketts einfach und sicher und ohne Geruchsbildung in Brand gesetzt werden können. Schließlich soll die Temperatur an der Aufstellfläche der Schale den zulässigen Wert von 70° nicht übersteigen. Weiter soll der Benutzer des Grills angehalten werden, die Schale, den Rost oder die Roste und die ausgeglühten Holzkohle-Briketts nach Gebrauch umweltgerecht zu entsorgen. In einer weiterentwickelten Ausführungsform sollen die Holzkohle-Briketts und die Zündhilfe trotz ihrer Anordnung in Gebrauchslage staub- und geruchdicht verpackt sein. Diese und andere Aufgaben werden mit dem erfindungsgemäßen Fertig-Grill gelöst. Ausgehend von einem bekannten Fertig-Grill der eingangs genannten Gattung zeichnet sich der erfindungsgemäße Grill in erster Linie dadurch aus, daß die Wände Stufen mit treppenförmigen Absätzen aufweisen, ein Kohlerost und ein Grillrost mit Abstand übereinander in der Schale gehalten und Holzkohle-Briketts und die Zündhilfen zwischen Kohlerost und Grillrost angeordnet sind. Die treppenförmigen Absätze versteifen die Schale und bilden eine Auflage für den Grillrost. Der Kohlerost befindet sich in einem wählbaren Abstand über dem Boden der Schale. Dadurch wird diese nicht übermäßig erhitzt. Ebenso befindet sich der Grillrost mit dem Grillgut in einem wählbaren Abstand über den Holzkohle-Briketts. Die Größe dieser Abstände liegt in der Hand des Konstrukteurs. Dieser gibt der Form, in der die Schale aus dünnem Blech gepreßt wird, die entsprechende Gestalt. Die Holzkohle-Briketts und die Zündhilfe werden schon bei der Herstellung des Fertig-Grills zwischen den beiden Rosten angeordnet. Mit dem Kauf des erfindungsgemäßen Fertig-Grills erwirbt der Käufer damit schon die für einen Grillvorgang benötigten Holzkohle-Briketts und die für deren Zünden erforderliche Zündhilfe.

Zweckmäßig weist der obere Rand der Schale eine mit dem oberen treppenförmigen Absatz zusammenwirkende und den Grillrost einklemmende Bördelung auf. Dadurch wird der Grillrost fest mit der Schale verbunden. Dies verhindert, daß die Holzkohle-Briketts auch bei einer Schräglage oder Kippen des Grills herausfallen. Insbesondere bei in Betrieb befindlichen und damit glühenden Holzkohle-Briketts kann dies gefährlich werden.

Zweckmäßig ist der Kohlerost entlang zweier sich gegenüberliegender Seiten nach unten abgewinkelt und steht mit seinen nach unten abgewinkelten Enden auf dem Boden der Schale auf. Zur Gewichts- und Kostenersparnis besteht der Kohlerost aus einem möglichst weitmaschigen Gitter. Die Stabilität eines solchen weitmaschigen Gitters ist gering. Die nach unten abgewinkelten Enden gleichen dies aus und führen zu einer insgesamt hohen Stabilität des Kohlerostes. Es hängt von der Form und Ausrichtung der Maschen des den Kohlerost bildenden Gitters ab, ob dieser an seinen beiden Längs- oder an seinen beiden Schmalseiten nach unten abgewinkelt ist. Bei in Längsrichtung ausgerichteten Maschen sind seine beiden Schmalseiten nach unten abgewinkelt.

In einer zweckmäßigen Ausgestaltung sind die Holzkohle-Briketts in einem Papierbeutel eingeschlossen. Vorzugsweise hat dieses Papier ein Gewicht von 50 g/m². Ein solches Papier verbindet ausreichende Festigkeit mit genügend großer Zündfreundlichkeit. Als Zündhilfe werden zweckmäßig Zündwürfel aus geruchlos und rußfrei abbrennenden Paraffinen mit einem Aromatengehalt von < 0,1 % hergestellt. Diese Paraffine verdunsten im Laufe der Zeit. Erfindungsgemäß sind die Zündwürfel daher in einen Beutel aus einer brennbaren, wasser- und gasdichten Kunststoffolie eingeschlossen. Dies stellt sicher, daß die Zündwürfel auch nach langer Lagerzeit bei Berühren mit einer Flamme sofort zünden.

Der Abstand zwischen dem Kohlerost und dem Grillrost ist in etwa gleich der Höhe der Holzkohle-Briketts und der zwischen diesen verteilt aufgelegten Zündwürfel. Bei der Herstellung des Fertig-Grills wird der die Holzkohle-Briketts enthaltende Papierbeutel auf den Kohlerost aufgelegt. Der die Zündwürfel enthaltende Beutel wird auf den Papierbeutel aufgelegt. Dabei werden die Holzkohle-Briketts und die Zündwürfel so verteilt, daß die letzteren in der Längsmitte gleichmäßig zwischen den sie umgebenden Holzkohle-Briketts liegen. Anschließend wird der Grillrost aufgelegt und durch Umbördeln des Randes der Schale befestigt. Dadurch werden auch die Holzkohle-Briketts und die Zündwürfel in ihrer Lage fixiert.

Auch beim Transport des Fertig-Grills, bei dessen Kippen und Schütteln behalten sie ihre Lage bei und rutschen nicht hin und her. Dadurch wird ein Abrieb der Holzkohle-Briketts vermieden.

Die Öffnungen werden zweckmäßig durch Stanzen des die Schale bildenden Blechs von außen nach innen hergestellte so daß ein sich bildender Grat auf der Innenseite der Wände liegt. Damit wird die Gefahr ausgeschaltet, daß ein Benutzer seine Finger an einem nach außen vorstehenden Grat verletzen könnte.

In einer weiteren zweckmäßigen Ausgestaltung ist vorgesehen, daß die Öffnungen in einem solchen Abstand über dem Boden der Schale angeordnet sind, daß sich unter ihnen ein Ascheraum bildet. Damit wird ein sauberes Abbrennen der Holzkohle-Briketts ermöglicht und eine Verunreinigung der Umgebung verhindert. Weiter werden die Holzkohle-Briketts in einem solchen Abstand vom Boden der Schale gehalten, daß diese auch im Betrieb ausreichend kühl bleibt. Zweckmäßig haben die Öffnungen einen Querschnitt von maximal 50 mm² nach DIN 66077/09.81.

Die Holzkohle-Briketts sind vorzugsweise aus Holzkohle-Granulat nach DIN 51749 gepreßt.

Zur sicheren Lagerung, zum sicheren Transport und auch als Verkaufspackung ist noch ein Rahmen mit Innenmaßen entsprechend den Außenmaßen der Schale vorgesehen. Damit läßt sich die Schale in den Rahmen einlegen und wird mit enger Passung in diesem gehalten. Vorzugsweise besteht der Rahmen aus Längs- und Querschenkeln, wobei die Längsschenkel an ihrer Oberseite Aussparungen und die Längs- und die Querschenkel an ihren Unterseiten Aussparungen aufweisen. Dabei sollten die Aussparungen an der Oberseite der Längsschenkel eine Länge entsprechend der Breite der Schale aufweisen. Damit läßt sich die Schale nach einem Herausnehmen aus dem Rahmen und nach einer Drehung um 90° in die Aussparungen an der Oberseite der Längsschenkel einsetzen. Dies bringt mehrere Vorteile. Durch den Rahmen wird die Schale mit den glühenden Holzkohle-Briketts in einem ausreichenden Sicherheitsabstand von einer hitzeempfindlichen oder vielleicht auch brennbaren Unterlage gehalten. Weiter kann Luft durch die Aussparungen an den Unterseiten der Schenkel in den Rahmen eintreten und von diesem durch die Öffnungen in der Schale zu den Holzkohle-Briketts gelangen. Dadurch ergeben sich ein regelrechter Zug und ein Schornsteineffekt. Die Holzkohle-Briketts brennen gleichförmig ab. Der Ascheraum unter ihnen wird durch die Zugluft gekühlt. Damit sinkt auch die Temperatur des Bodens der Schale. Zum Erzielen eines sicheren Halts der Schale in den Aussparungen an der Oberseite der Längsschenkel sind diese zweckmäßig entsprechend den Wänden der Schale geformt. Damit wird die Schale sicher in den Aussparungen an der Oberseite der Längsschenkel gehalten und in dieser Soll-Lage sozusagen verriegelt.

Der Rahmen und die Schale können Quadrat- und auch Rechteckform aufweisen. Bei Rechteckform des Rahmens und der Schale sind in einer Längswand der letzteren zweckmäßig je vier Öffnungen vorgesehen.

In einer zweckmäßigen Ausgestaltung sieht die Erfindung noch einen Entsorgungs-Beutel mit einem Innenmaß entsprechend dem Außenmaß des Rahmens mit eingelegter Schale vor. Nach Gebrauch wird die Schale flach zusammengedrückt. Dadurch wird ihr Volumen herabgesetzt. In dieser zusammengedrückten Form wird sie zusammen mit dem Rahmen in den Entsorgungs-Beutel eingeschoben. Der Benutzer des Grills kann diesen Beutel auch ohne Verschmutzungs- und Verletzungsgefahr umweltbewußt der Entsorgung bzw. dem Recycling zuführen.

Die Schale besteht vorzugsweise aus Aluminiumblech, während der Rahmen vorzugsweise aus Wellpappe oder Karton besteht. Der auf dem Rahmen aufstehende Boden wird auch im Betrieb nicht besonders heiß. Thermische Prüfungen haben gezeigt, daß die Gefahr eines Entflammens des Rahmens nicht besteht.

In einer zweckmäßigen Ausgestaltung ist vorgesehen, daß der Rahmen mit gefüllter eingesetzter Schale in eine Schrumpfpackung eingeschlossen ist, der Entsorgungs-Beutel in zusammengefalteter Form zwischen dem Boden der Schale und der Unterseite der Schrumpfpackung liegt und Zündhölzer zwischen dem Boden der Schale und dem zusammengefalteten Entsorgungs-Beutel eingelegt sind. Durch die Schrumpfpackung werden der Rahmen, die Schale, die in diesen eingefüllten Grillkohle-Briketts und die Roste sicher zusammengehalten. Die Schrumpfpackung bildet eine weitgehend staubdichte Umhüllung. Die beigegebenen Zündhölzer verwendet der Anwender zum Anzünden und Entflammen der Zündwürfel.

Die Zündwürfel werden zweckmäßig aus geruchlos und rußfrei abbrennenden Paraffinen mit einem Aromatengehalt von < 0,1 % hergestellt.

Am Beispiel der in der Zeichnung gezeigten Ausführungsform wird die Erfindung nun weiter beschrieben. In der Zeichnung ist:

Fig. 1 eine schematische vereinfachte Seitenansicht des Rahmens mit der eingesetzten Schale und eingelegtem Entsorgungs-Beutel,

Fig. 2 eine auseinandergezogene perspektivische Darstellung der Schale mit eingelegtem Grillrost, des Rahmens und des Entsorgungs-Beutels,

Fig. 3 eine Seitenansicht des Grills im Betrieb, teilweise im Schnitt, aus auf dem Rahmen aufstehender Schale und

Fig. 4 eine entsprechende Ansicht von oben.

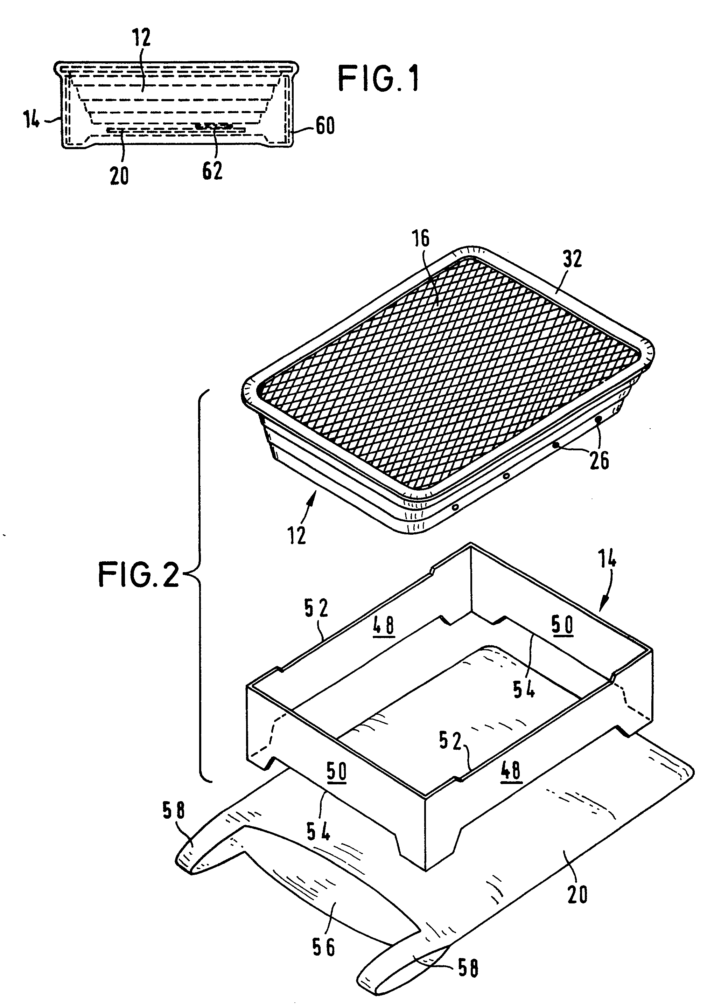

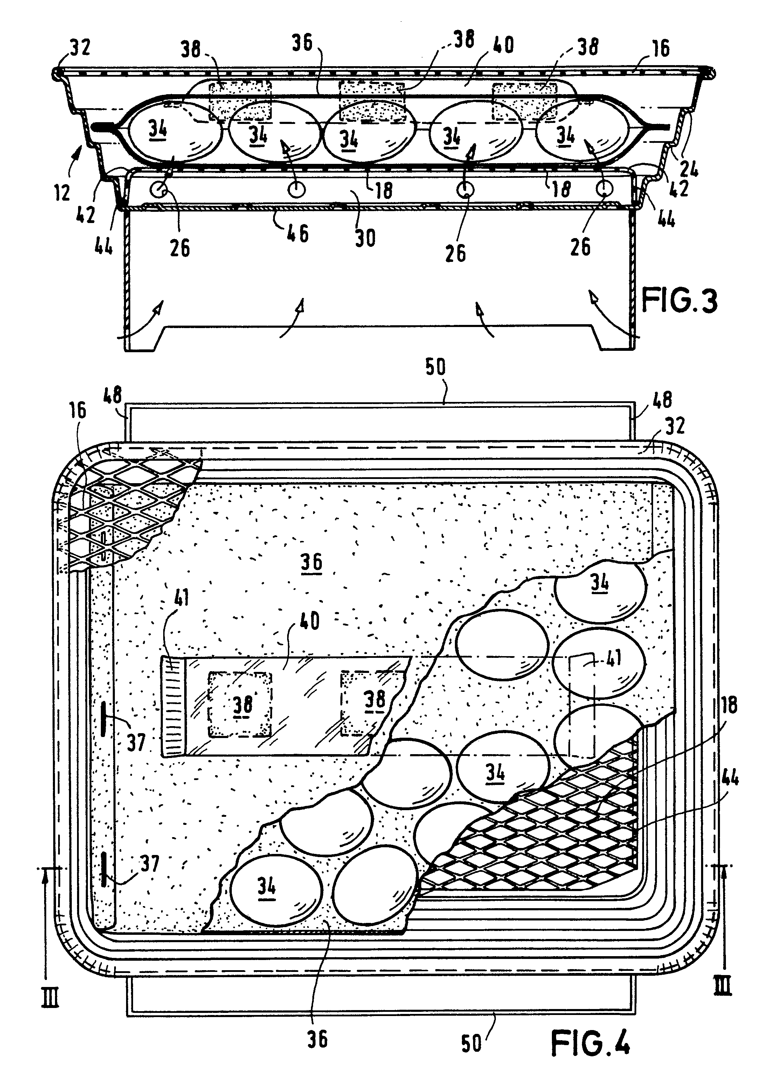

Die Figuren 1 und 2 zeigen die Grundelemente des FertigGrills mit der Schale 12, dem Rahmen 14 und dem Grillrost 16. Diese Figuren zeigen weiter den Entsorgungs-Beutel 20. Weitere Einzelteile werden nun unter Bezug auf die Figuren 3 und 4 erläutert. Diese Figuren zeigen den Kohlerost 18. Man sieht weiter die in die Wände der Schale 12 eingepreßten treppenförmigen Absätze 24. Im unteren Bereich der Schale 12 befinden sich die Öffnungen 26. Im unteren Bereich der Schale 12, die auch die Öffnungen 26 aufweist, befindet sich der Ascheraum 30. Der obere Rand der Schale 12 weist eine Bördelung 32 auf. Damit wird der Grillrost 16 an seinem Rand zwischen dem oberen treppenförmigen Absatz 24 und der Bördelung 32 eingeklemmt und sicher gehalten. Auf dem Kohlerost 18 liegen gleichförmig verteilt die Holzkohle-Briketts 34. Diese sind in einem Papierbeutel 36 eingeschlossen. Dessen in den Figuren 3 und 4 links liegendes Ende ist ursprünglich zum Einfüllen der Holzkohle-Briketts 34 offen. Anschließend wird es mit Heftklammern 37 verschlossen. In der Längsmitte und zwischen den Holzkohle-Briketts 34 verteilt befinden sich drei Zündwürfel 38. Diese sind in einem Beutel 40 aus einer Kunststoffolie eingeschlossen. Ursprünglich ist dieser Beutel ein an bei den Seiten offener Schlauch, dessen Enden 41 nach Einfüllen der Zündwürfel 38 verschlossen werden. Die Figuren 3 und 4 zeigen, daß der Kohlerost 18 an seinen beiden Schmalseiten entlang der Kanten 42 nach unten abgewinkelt ist. Seine nach unten abgewinkelten Enden 44 stehen auf dem Boden 46 der Schale 12 auf. Gemäß der Darstellung in Fig. 3 weist diese Verstärkungssiken auf. Gemäß der Aufsicht in Fig. 4 sind die Maschen des den Kohlerost 18 bildenden Gitters in dessen Längsrichtung ausgerichtet. Daraus ergibt sich aus Gründen der Stabilität, daß der Kohlerost 18 an seinen beiden Schmalseiten nach unten abgewinkelt ist. Wie insbesondere Fig. 2 zeigt, besteht der Rahmen 14 aus den beiden Längsschenkeln 48 und den beiden Querschenkeln 50. Die Längsschenkel 48 weisen an ihren Oberseiten Aussparungen 52 und beide Schenkelarten weisen an ihren Unterseiten Aussparungen 54 auf. Fig. 2 zeigt noch die Öffnung 56 im Entsorgungs-Beutel 20 und dessen beide Tragegriffe 58. Fig. 1 zeigt noch eine Schrumpfpackung 60, die den Rahmen 14 mit der eingesetzten Schale 12 und den daruntergelegten Entsorgungs-Beutel 20 umschließt. In der Schale 12 befinden sich bereits der Kohlerost 18, die Holzkohle-Briketts 34, die Zündwürfel 38 und der Grillrost 16. Fig. 1 zeigt weiter noch die beigegebenen Zündhölzer 62. Sie liegen zwischen dem Boden der Schale 12 und dem zusammengefalteten Entsorgungs-Beutel 20.

Fig. 3 zeigt, wie die Abmessungen der einzelnen Teile aufeinander abgestimmt sind. Der Kohlerost 18 liegt so hoch über dem Boden 46 der Schale, daß sich ein ausreichend großer Ascheraum 30 ergibt. Der Abstand zwischen dem Grillrost 16 und dem Kohlerost 18 ist weiter so gewählt, daß die dazwischen in dem Papierbeutel 36 befindlichen Holzkohle-Briketts 34 und die in dem Beutel 40 befindlichen Zündwürfel 38 eingeklemmt sind. Damit werden sie rüttelsicher gehalten. Die Aufsicht in Fig. 4 läßt weiter erkennen, daß die drei Zündwürfel 38 in der Längsmittellinie gleichmäßig verteilt zwischen den Holzkohle-Briketts 34 angeordnet sind.

Nach dieser Einzelbeschreibung kann ein Betriebsablauf geschildert werden. Fig. 1 zeigt den Fertig-Grill im Transport-oder Lagerzustand. Er nimmt wenig Raum ein. Er kann gestapelt werden. Die Schrumpfpackung 60 umschließt den Grill weitgehend staub- und fast luftdicht. Zwischen den Grillrost und die Schrumpfverpackung 60 ist ein Deckblatt eingelegt, das mit einem erläuternden und verkaufsfördernden Text und Bildern bedruckt ist. Zwischen den Entsorgungs-Beutel 20 und die Unterseite der Schrumpfpackung 60 ist eine Gebrauchsanweisung mit Hinweisen für Sicherheit und Entsorgung und mit der Möglichkeit einer Verbundwerbung eingelegt. Diese Hinweise und die Verbundwerbung sind noch bei geschlossener Schrumpfpackung 60 zu lesen und zu erkennen. Das heißt, daß ein interessierter Kunde sich schon im Verkaufslokal ohne Beanspruchung eines Verkäufers selbst ausreichend über Sinn, Anwendung und Vorteile des erfindungsgemäßen Fertig-Grills unterrichten kann. Zum Gebrauch wird die Schrumpfverpackung 60 geöffnet. Die Schale 12 wird zusammen mit ihrem Inhalt aus dem Rahmen 14 herausgenommen. In Fig. 2 ist dies angedeutet. Sie wird um 90° gedreht und in die Aussparungen 52 eingesetzt. Es ergibt sich das in den Figuren 3 und 4 erkennbare Bild. Der Entsorgungs-Beutel 20 wird beiseite gelegt. Die geöffnete Schrumpfpackung 60 kann als erstes in ihn eingeschoben werden. Der Fertig-Grill ist nun betriebsbereit. Die Zündwürfel 38 werden durch den Beutel 40 mit einem brennenden Zündholz oder einem Feuerzeug mit einem Fidibus angezündet. Hierzu können die Zündhölzer 62 verwandt werden. Dies erfolgt von oben über den Grillrost 16. Die Zündwürfel 38 brennen ausreichend lang bis zum Zünden der Holzkohle-Briketts 34 durch den Papierbeutel 36 hindurch. Bei Rotglut dieser Holzkohle-Briketts soll das Grillgut, Würstchen, Kottelets und dergleichen, auf den Grillrost 16 aufgelegt werden. Es bildet sich ein Luftzug aus. Ohne die Aussparungen 54 gäbe es auf der gesamten Fläche einen Wärmestau. Der Luftzug dagegen verhindert diesen Wärmestau. Die Temperatur am Boden der Schale 12 steigt nicht über den zulässigen Wert von 70° C. Die in Fig. 3 eingezeichneten Pfeile deuten den Luftzug an. Wie bereits erläutert wurde, kühlt dieser Luftzug den Ascheraum 30, den Boden 46 der Schale 12 und den Rahmen 14. An den Füßen des Rahmens 14 herrscht Umgebungstemperatur. Wie die Figuren 3 und 4 zeigen, können die glühenden Holzkohle-Briketts 34 auch bei einem Umstoßen des Grills nicht aus diesem herausfallen. Nach dem Abbrennen der Holzkohle-Briketts 34 wird die noch heiße und im Ascheraum 30 befindliche Asche mit Wasser gelöscht. Die leergebrannte Schale 12 wird zusammengedrückt. Der Rahmen 14 wird zusammengefaltet. Damit sinkt das Volumen von Schale 12 und Rahmen 14. Beide Teile lassen sich dann mühelos in den Entsorgungs-Beutel 20 einschieben. Damit kann der gesamte Fertig-Grill nach Benutzung mühelos abtransportiert werden. Dieser saubere Abtransport des gebrauchten Grills wird dem Benutzer durch die Mitlieferung des Entsorgungs-Beutels 20 so leicht gemacht, daß der Grillplatz oder allgemein die Umwelt mit Sicherheit nicht belastet wird. Die technische Ausführung des erfindungsgemäßen Fertig-Grills und die Erfüllung von Normen, Verordnungen und Bestimmungen bei Anwendung des Grills werden durch die Zeichengenehmigung GS = geprüfte Sicherheit vom TÜV Rheinland bestätigt.

## Ansprüche

1. Fertig-Grill mit einer Schale mit in deren Wänden vorgesehenen Öffnungen, mit mindestens einem an den Wänden in einem Abstand über dem Boden gehaltenen Rost zum Auflegen des Grillgutes, mit zwischen Boden und Rost befindlichen Holzkohle-Briketts und mit einer Zündhilfe, dadurch gekennzeichnet, daß die Wände Stufen (22) mit treppenförmigen Absätzen (24) aufweisen, ein Kohlerost (18) und ein Grillrost (16) mit Abstand übereinander in der Schale (12) gehalten und Holzkohle-Briketts (34) und die Zündhilfen zwischen Kohlerost (18) und Grillrost (16) angeordnet sind.

2. Fertig-Grill nach Anspruch 1, dadurch gekennzeichnet, daß der obere Rand der Schale (12) eine mit dem oberen treppenförmigen Absatz (24) zusammenwirkende und den Grillrost (16) einklemmende Bördelung (32) aufweist.

3. Fertig-Grill nach einem der Ansprüche 1 und 2, dadurch gekennzeichnet, daß der Kohlerost (18) entlang zweier sich gegenüberliegender Seiten nach unten abgewinkelt ist und mit seinen nach unten abgewinkelten Enden (44) auf dem Boden (46) der Schale (12) aufsteht.

4. Fertig-Grill nach einem der Ansprüche 1 bis 3, dadurch gekennzeichnet, daß die Holzkohle-Briketts (34) in einem Papierbeutel (36) eingeschlossen sind.

5. Fertig-Grill nach einem der Ansprüche 1 bis 4, dadurch gekennzeichnet, daß die Zündwürfel (38) in einen Beutel (40) aus einer brennbaren, wasser- und gasdichten Kunststoffolie eingeschlossen sind.

6. Fertig-Grill nach einem der Ansprüche 1 bis 5, dadurch gekennzeichnet, daß der Abstand zwischen dem Kohlerost (18) und dem Grillrost (16) in etwa gleich der Höhe der Holzkohle-Briketts (34) und der zwischen diesen verteilt aufgelegten Anzündwürfel (36) ist.

7. Fertig-Grill nach einem der Ansprüche 1 bis 6, dadurch gekennzeichnet, daß die Öffnungen (26) durch Stanzen von außen nach innen hergestellt sind, der Grat auf der Innenseite der Wände liegt und die Öffnungen (26) in einem solchen Abstand über dem Boden der Schale (12) angeordnet sind, daß sich unter ihnen ein Ascheraum bildet.

8. Fertig-Grill nach einem der Ansprüche 1 bis 7, dadurch gekennzeichnet, daß ein Rahmen (14) mit Innenmaßen entsprechend den Außenmaßen der Schale (12) vorgesehen ist, so daß die letztere in dem ersteren aufnehmbar ist.

9. Fertig-Grill nach Anspruch 8, dadurch gekennzeichnet, daß der Rahmen (14) aus Längs- und Querschenkeln (48, 50) besteht, die Längsschenkel (48) an ihrer Oberseite Aussparungen (52) und die Längs- und die Querschenkel (48, 50) an ihren Unterseiten Aussparungen (54) aufweisen.

10. Fertig-Grill nach Anspruch 9, dadurch gekennzeichnet, daß die Aussparungen (52) an der Oberseite der Längsschenkel (48) eine Länge entsprechend der Breite der Schale (12) aufweisen und an deren Form angepaßt sind.

11. Fertig-Grill nach einem der Ansprüche 1 bis 12, gekennzeichnet durch einen Entsorgungs-Beutel (20) mit einem Innenmaß entsprechend dem Außenmaß des Rahmens (14) mit eingesetzter Schale (12).

12. Fertig-Grill nach einem der Ansprüche 1 bis 11, dadurch gekennzeichnet, daß der Rahmen (14) mit gefüllter eingesetzter Schale (12) in eine Schrumpfpackung (60) eingeschlossen ist, der Entsorgungs-Beutel (20) in zusammengefalteter Form zwischen dem Boden der Schale (12) und der Unterseite der Schrumpfpackung (60) liegt und die Zündhölzer (62) zwischen dem Boden der Schale (12) und dem zusammengefalteten Entsorgungs-Beutel (20) eingelegt sind.

FIG.1

FIG.2

Sch 41 / 30

EP 0 380 086 A1

FIG.3

FIG.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| P,X | DE-U-8900839 (LINKE ALBERT) <br> * das ganze Dokument * <br> --- | 1-12 | A47J37/07 |
| X | WO-A-8700017 (SOCIETE COMMERCIALE DES ETABLISSEMENTS BLONDEAU S.A.) <br> * das ganze Dokument * | 1-3, 5, 6 | |
| A | | 8 | |
| D,A | US-A-4455992 (HSIAO CHIN WEN) <br> * Spalte 1, Zeile 38 - Spalte 2, Zeile 15; Figuren 1, 2 * <br> --- | 1, 3 | |
| D,A | US-A-3946651 (GARCIA JOEL H.) <br> * Spalte 1, Zeilen 51 - 55; Figur 3 * <br> --- | 1, 2 | |
| A | FR-A-1573030 (GONNET S.A.) <br> * linke Spalte, Zeilen 17 - 35; Figur 3 * <br> --- | 1, 4 | |
| A | BE-A-906015 (LERMER WILLY) <br> * Seite 1, Zeilen 13 - 26 * <br> ----- | 1, 11, 12 | |

**RECHERCHIERTE SACHGEBIETE (Int. Cl.5 )**

A47J
F24B

Der vorliegende Recherchenbericht wurde für alle Patentansprüche erstellt

| Recherchenort | Abschlußdatum der Recherche | Prüfer |
|---|---|---|
| DEN HAAG | 03 MAI 1990 | FUOCHI R. |